# EUROPEAN PATENT APPLICATION

(11) **EP 0 931 568 A1**
(43) Date of publication of application: **28.07.1999**
(21) Application number: 98929652.0
(22) Date of filing: 24.06.1998
(51) Int. Cl.: A62C 3/16, B32B 25/14

(54) **FIRE SHEET, METHOD OF MOUNTING SAME, AND FIRE PROTECTION CONSTRUCTION**

(30) Priority: 25.06.1997 JP 16929497; 01.08.1997 JP 20810597; 20.10.1997 JP 28737997; 12.02.1998 JP 3023498
(71) Applicant: Fujikura, Ltd., Tokyo 135-0042 (JP)
(72) Inventor: SAWADA, Hirotaka-Fujikura Ltd., Tokyo 135-0042 (JP); HASEGAWA, Masatake,Fujikura Ltd., Tokyo 135-0042 (JP); SHINMOTO, Takashi-Fujikura Ltd., Tokyo 135-0042 (JP); KATAYAMA, Eiji-Fujikura Ltd., Mie 510-0226 (JP); TAKAHARA, Katsuji-Fujikura Ltd., Mie 510-0226 (JP); MOCHIZUKI, Terunobu-Fujikura Ltd., Mie 510-0226 (JP); TERAMOTO, Keigo-Fujikura Ltd., Shizuoka 410-0005 (JP); KAMIJO, Tetsuya-Fujikura Ltd., Shizuoka 410-0005 (JP); SOEJIMA, Hisanobu-Nippon Steel Corporation, Futtsu-shi,Chiba 293-0011 (JP); HAYASHI, Yasuichi-Nippon Steel Corporation, Chiba 299-1141 (JP); KITAGAWA, Shigeru-Nippon Steel Corporation, Chiba 299-1141 (JP)
(74) Representative: Calderbank, Thomas Roger
(86) International application number: JP9802800
(87) International publication number: WO9858704

(57) **Abstract**

This invention relates to a fire-prevention sheet in which at least one rubber sheet having an oxygen index equal to or more than 28, a thickness of 0.1-3mm and a hydrogen halide gas generation ability of 0-350mg/g, and at least one metal sheet having a thickness of 15-200µm are layered. The fire-prevention sheet has the fire spread prevention effect exceeding the level that not all of a sample cable, which would be completely destroyed by fire if it were used as a sample in IEC332-3 category C, is destroyed by fire even in IEC332-3 category A.

A layered sheet consisting of a heat expandable rubber mixture in expectation of an expansion ratio equal to or more than 4 and a fabric may be used instead of the above rubber sheet.

This invention also relates to a fire-prevention structure in which a perforated part is blocked by a first and a second fire-prevention sheet, and gaps in the contact part of them are filled with a non-hardening type and heat-resistant sealing material, and a layered sheet of an incombustible rubber sheet and a metal sheet is used as the first and the second fire-prevention sheet.

Further, wires or cables laid in a pit may be surrounded with a fire-prevention sheet consisting of a rubber sheet and a metal sheet. Sandbags may be disposed thereon.

## Description

### Field of the Invention

The present invention relates to a fire-prevention sheet which is used to prevent cables laid in a cable rack in a tunnel, a building or the like; or gas pipes coated with resin for corrosion-resistance; from burning and spreading a fire, and relates to a fitting method of the sheet. Further, the present invention relates to a fire-prevention structure of a perforated part for cables such as electric cables and communication cables in a fire wall or floor of a building, and relates to a fire-prevention structure to prevent cables and the like laid in a pit or a metal duct from burning and spreading a fire.

This application is based on Japanese Patent Application No. Hei 9-169249, 9-208105, 9-287379 and 10-30234, the contents of which are incorporated by reference.

### Background Art

It has been pointed out for some time that cables laid in a cable rack or the like in a pipe space of a tunnel or a building may burn when a fire occurs and they may promote the spread of a fire because they can act as mediums or routes for the fire. Therefore, some measures, such as making the material for the cables incombustible, setting a fire plate to a perforated part for the cables, or applying inorganic type paints for fire-prevention onto the surfaces of cables have been taken.

These measures indeed have some merits. However, they have some demerits in terms of cost, operation efficiency, fire spread prevention effect and so on. Particularly, there are problems such that these measures are hard to take for cables which have already been laid, and they sometimes fail to prevent spread of fire with certainty.

Incidentally, in Japan, it is stipulated in the Rules of The Building Standards Act that a perforated part of a wall or a floor for cables such as electric cables in a fire zone of a building must have the same fire-prevention ability as the wall or the floor itself has.

Some kinds of fire-prevention structure fulfilling such standards have already been proposed and implemented. The fire-prevention structures disclosed in Japanese Kokoku Publications No. Hei 4-70853 and No. Hei 7-36665, or various kinds of fire-prevention methods authorized by the Japan Construction Center, which is a foundation, have been known as examples.

However, these conventional fire-prevention structures or methods have defects such that they are poor in operation efficiency, their fire-prevention ability considerably depends on the quality of execution, and execution is difficult when installing more cables or changing old cables.

Incidentally, it also has been pointed out for some time that cables laid in a pit or metal duct may burn when a fire occurs and they may promote the spread of the fire because they can act as mediums or routes for the fire.

### Summary of the Invention

It is an object of the present invention to provide a fire-prevention sheet which can easily prevent cables from burning in a fire and preventing spread of the fire with certainty irrespective of whether the cables are newly installed or not.

Another object of the present invention is to provide a fire-prevention structure of a perforated part for cables, which can solve the various problems found in the conventional fire-prevention structures.

And, a further object of the present invention is to provide a fire-prevention structure for cables, which can prevent the cables laid in a pit, a metal duct or the like from burning in a fire and promoting spread of the fire and can reduce hard labor when installing new cables or changing old cables.

The present invention is a fire-prevention sheet in which at least one rubber sheet having an oxygen index equal to or more than 28, a thickness of 0.1-3mm and a hydrogen halide gas generation ability of 0-350mg/g, and at least one metal sheet having a thickness of 15-200µm are layered. The above objects will be accomplished by covering or wrapping cables with the fire-prevention sheet.

The rubber sheet may form one surface of the fire-prevention sheet and the metal sheet may form the other surface, and the radiation coefficient of each surface may be equal to or more than 0.5.

Either a polyolefine type mixture or polychloroprene type mixture is suitable as the rubber mixture constituting the rubber sheet.

The above objects can also be accomplished by covering or wrapping cables with a fire-prevention sheet in which at least one rubber sheet having an oxygen index equal to or more than 28, a thickness of 0.1-3mm and a hydrogen halide gas generation ability equal to or more than 80mg/g, and at least one metal sheet having a thickness of 25-200µm are layered.

Said fire-prevention sheet may preferably have a fire spread prevention effect exceeding the level that not all of a sample cable is destroyed by fire in the IEC332-3 category A, which is a burning test regulated for a vertically set cable, under the conditions that the fire-prevention sheet is continuously or intermittently wound around a part of the sample cable of which all would be completely destroyed by fire if it were used as a sample in the IEC332-3 category C, said part being above a line equal to or more than 30cm above a burner.

A polychloroprene type mixture is suitable as the rubber mixture constituting the rubber sheet of said fire-prevention sheet.

Further, the above objects can also be accomplished by covering or wrapping cables with a fire-prevention sheet in which at least one layered rubber sheet having an oxygen index equal to or more than 28, a thickness of 0.2-3mm and no hydrogen halide gas generation ability, which is manufactured by applying a heat expandable rubber mixture in expectation of an expansion ratio equal to or more than 4 onto both surfaces of a fabric having a thickness of 0.1-0.5mm, and at least one metal sheet having a thickness of 15-200µm are layered.

An incombustible plastic sheet having a radiation coefficient equal to or more than 0.5 may be attached to the surface of the metal sheet.

An ethylene-vinyl acetate copolymer type rubber mixture is suitable as the heat expandable rubber mixture constituting the layered rubber sheet.

A rectangular sheet in which a rubber sheet having an oxygen index equal to or more than 28, a thickness of 0.1-3mm and a hydrogen halide gas generation ability of 0-350mg/g is covered with a metal sheet having a thickness of 15-350µm, and a dark colored corrosion-resisting material is layered onto the metal sheet, wherein the edge of the metal sheet is located further inside than the edge of the rubber sheet and the dark colored corrosion-resistant material, and therefore the rubber sheet and the dark colored corrosion-resistant material are in direct contact along the long side of the sheet may be used as a fire-prevention sheet.

In the above rectangular fire-prevention sheet, it is preferable that the width of the direct contact part of the rubber sheet and the dark colored corrosion-resistant material is equal to or more than 2mm.

The above rectangular fire-prevention sheet is fitted to a long object by winding the sheet around the object so that the edge of the long side of the rectangular fire-prevention sheet crosses at about a right angle to the long axis of the object, and folding the edge of the short side of the rectangular fire-prevention sheet to the inside in order to prevent an exposure of the edge to the outside when wrapping the object by the sheet. It is preferable to fold the edges of both short sides of the rectangular fire-prevention sheet together after overlapping them so that the width of the overlap is equal to or more than 3cm.

On the other hand, a fire-prevention structure for a perforated part for cables, wherein the cables in the perforated part are surrounded by a first fire-prevention sheet and each opening of the part is covered with a second fire-prevention sheet, whereby the edge of the second fire-prevention sheet contacts the first fire-prevention sheet, gaps in the contact are filled with a non-hardening type and heat-resistant sealing material, and a sheet in which an incombustible rubber sheet and a metal sheet are layered is used as the first and the second fire-prevention sheet, also belongs to the present invention.

And, a fire-prevention structure for cables characterized in that cables laid in a pit or a metal duct are surrounded with a fire-prevention sheet also belongs to the present invention. It is preferable to place sand bags on the fire-prevention sheet.

### Brief Description of the Drawings

Figure 1 is a cross sectional view of an example of a fire-prevention sheet which pertains to the present invention.
Figure 2 is a cross sectional view of an another example of a fire-prevention sheet which pertains to the present invention.
Figure 3 is a cross sectional view of an another example of a fire-prevention sheet which pertains to the present invention.
Figure 4 is a figure showing the outline of a Steiner Tunnel horizontal fire test chamber used in a burning test in the present invention.
Figure 5 is a figure showing a vertical burning test in the present invention.
Figure 6 is a figure showing an example of the usage of a fire-prevention sheet of the present invention.
Figure 7 is a figure showing an example of a fire-prevention sheet which pertains to the present invention.
Figure 8 is a figure showing an example of a fitting method which pertains to the present invention.
Figure 9 is a figure showing an example of a fire-prevention structure which pertains to the present invention.
Figure 10 is a cross sectional view of a fire-prevention structure for cables, which pertains to the present invention, from the direction of extension line of the cables.

### Preferred Embodiments of the Present Invention

Details of the present invention will be described hereunder.

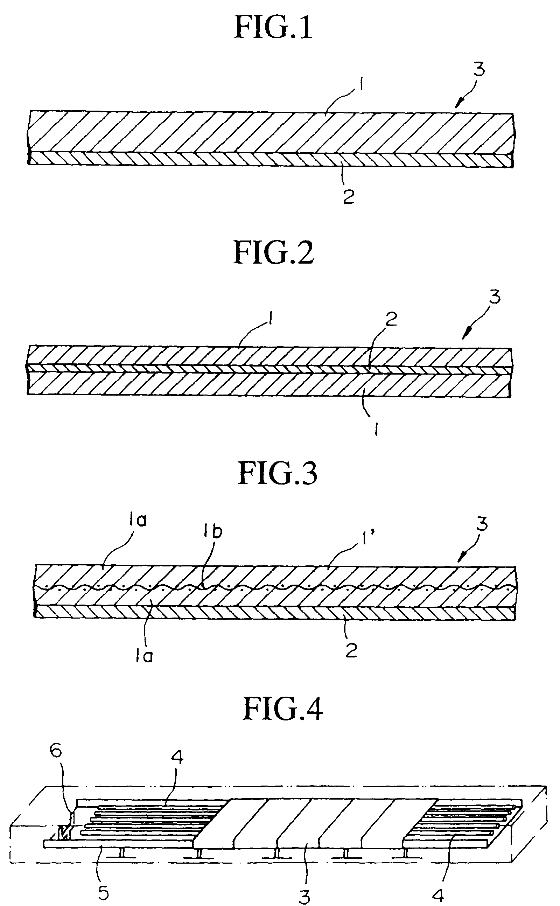

Figure 1 shows an example of a fire-prevention sheet which pertains to the present invention. In the figure, numeral 1 designates a rubber sheet, and the rubber sheet 1 is layered onto and integrated with the metal sheet 2 to form the fire-prevention sheet 3.

The rubber mixture constituting of the rubber sheet 1 has high incombustibility because its oxygen index is equal to or more than 28, preferably 30, more preferably 35, and has a generation ability of a gas, for example, hydrogen halide, of 0-350mg/g, preferably from 0 to less than 80mg/g, or a gas generation ability equal to or more than 80mg/g, preferably 150mg/g.

The oxygen index in this specification is defined by the measuring method regulated in JIS K 7201, and the volume of hydrogen halide gas is defined by the measuring method regulated in IEC-754-1.

If the oxygen index is less than 28, the fire spread prevention effect of the fire-prevention sheet 3 is insufficient because the fire-prevention sheet 3 becomes easy flammable.

If the volume of hydrogen halide gas which is generated when burning is less than 80mg/g, the fire spread prevention effect provided by the presence of noninflammable hydrogen halide gas may be insufficient, however, the danger due to poisonous hydrogen halide gas can be small. On the other hand, if the volume of hydrogen halide gas exceeds 350mmg/g, sufficient fire spread prevention effect can be obtained on account of the large volume of hydrogen halide gas, however, increases in the effect will be eventually suppressed, and the danger due to large volumes of poisonous hydrogen halide gas will increase.

The thickness of the rubber sheet 1 is set to be 0.1-3mm, preferably 0.5-3mm. If it is less than 0.1mm, sufficient prevention effects can not be obtained. On the other hand, if it exceeds 3mm, handling of the sheet becomes difficult because the weight of the sheet itself increases.

As the rubber mixture constituting the rubber sheet 1, both a rubber mixture which generates hydrogen halide and a rubber mixture which does not generate hydrogen halide can be recited. The examples of the rubber mixture which generates hydrogen halide include a halogenated rubber type mixture such as a polychloroprene type mixture, chlorinated polyethylene type mixture, chlorosulfonated polyethylene type mixture; a mixture containing a halogenated fire retardant and a non-halogenated type rubber such as a nitrile type rubber, butyl type rubber, ethylene-propylene type rubber and natural rubber; and the like. These kinds of mixture generate hydrogen halide when burning.

As the rubber mixture which does not generate hydrogen halide, for example, a mixture containing a non-halogenated type rubber such as a butyl rubber, ethylene-propylene rubber and natural rubber, and a plenty of inorganic compounds and their hydrates, such as aluminum hydroxide and magnesium hydroxide as a non-halogenated fire retardant can be used.

Among the above mixtures, a polychloroprene type mixture is preferable as the rubber mixture which generates hydrogen halide when burning. For example, a mixture consisting of polychloroprene 100 parts by weight, magnesium hydroxide 10-200 parts by weight, antimony oxide 5-50 parts by weight, phosphate frit 5-50 parts by weight, aging retardant 0.1-5 parts by weight, inorganic filler 10-100 parts by weight, carbon black 5-50 parts by weight is most preferable because it can surround cables and block air off even after the rubber sheet 1 is burned, carbonized and hardened.

On the other hand, a polyolefine type mixture is preferable as the rubber mixture which does not generate hydrogen halide when burning. For example, a mixture consisting of ethylene-propylene rubber(EPM) or ethylene-propylene diene rubber(EPDM) 100 parts by weight, magnesium hydroxide 50-300 parts by weight, phosphate frit 5-50 parts by weight, aging retardant 0.1-5 parts by weight, inorganic filler 10-100 parts by weight, carbon black 5-50 parts by weight is preferable. This mixture has the characteristic that it is carbonized and hardened after burning, like the above example.

As the above metal sheet 2, a foil having a thickness of 15-200µm and which is made of metal having a melting point equal to or more than 600°C such as iron, steel, copper, copper alloy, aluminum, aluminum alloy can be used.

A metal having a melting point less than 600°C is not appropriate as the foil because it can not maintain its shape in a fire on account of melting. And, if the thickness of the foil exceeds 200µm, handling of the fire-prevention sheet 3 becomes difficult because the flexibility of the sheet deteriorates.

The rubber sheet 1 and the metal sheet 2 can be easily integrated by means of adhesive such as gum type adhesive.

The size and shape of the fire-prevention sheet 3 is not restricted, however, a roll of the sheet having a width from 40 to 100cm and a length from 10 to 20m is desirable in terms of productivity and facility of use.

Figure 2 shows an another example of a fire-prevention sheet which pertains to the present invention. The fire-prevention sheet 3 of this example is constituted by layering of the rubber sheets 1, 1 onto both surfaces of the metal sheet 2 and integrating them.

In the case in which the fire-prevention sheet 3 is constituted by layering and integrating of a plurality of rubber sheets 1 or a plurality of metal sheets 2, as in this example, it is necessary that one of the rubber sheets 1 form at least one surface of the fire-prevention sheet 3 in its final constitution. This is because hydrogen halide, which will be generated by the rubber sheet 1 when burning, should be vented from the fire-prevention sheet 3 to the outside.

Figure 3 shows an another example of a fire-prevention sheet which pertains to the present invention. In the figure, numeral 1' designates a layered rubber sheet, which is layered onto and integrated with the metal sheet 2 to form the fire-prevention sheet 3.

The layered rubber sheet 1' is manufactured by applying a heat expandable rubber mixture 1a onto both surfaces of the fabric 1b.

The heat expandable rubber mixture 1a is a mixture having an oxygen index equal to or more than 28, preferably 50, and no generation ability of a hydrogen halide gas such as hydrogen chloride gas. And, it has the characteristics that it is hardened eventually and it is expanded by heat until the expansion ratio becomes equal to or more than 4, before it becomes hardened.

If the oxygen index is less than 28, the fire spread prevention effect is insufficient because the fire-prevention sheet 3 is easily flammable. The generation of hydrogen halide will cause undesirable effects such as corrosion of the metal member other than the core of the cable. And, if the expansion ration is less than 4, the heat insulation effect in a fire will be small, which is not preferable.

As specific examples of the above heat expandable rubber mixture, mixtures containing halogen-free rubbers such as butyl rubber, ethylene-propylene rubber, natural rubber and ethylene-vinyl acetate copolymer, many inorganic compounds and their hydrates, such as aluminum hydroxide and magnesium hydroxide, and chemical expanding agents such as azo-di-carbonamide, N,N-di-nitroso-pentamethylenetetramine, and 4,4-oxy-bis-benzenesulfonylhydrazide can be recited. Among the above specific examples, a mixture of ethylene-vinyl acetate copolymer including vinyl acetate 6-90wt% as the main constituent, inorganic compound and their hydrates, such as those mentioned above, chemical expanding agents such as those mentioned above, aging retardants and carbon black is specially desirable.

As the fabric 1b, a fabric having a thickness of 0.1-0.5mm and a weight of 10-300g/m², and consisting of natural fiber such as cotton, hemp and jute; synthetic fiber such as nylon, polyester and polyacryl fiber; recycled fiber such as artificial silk staple fiber; or inorganic fiber such as glass and carbon fiber can be used.

The heat expandable rubber mixture 1a is dissolved into an organic solvent such as xylene, toluene or MEK to form a coating material including 10-80wt% of solid content and the material is applied onto both surfaces of the fabric 1b and dried. This step may be repeated once or more with control of quantity of the applied material so that the thickness of the layered rubber sheet 1' becomes in the range of 0.2-3mm, preferably 0.3-0.5mm.

If the thickness of the layered rubber sheet 1' is less than 0.2mm, fire spread prevention effect can not be obtained. On the other hand, if it exceeds 3mm, the weight of the sheet increases and the facility of handling the sheet deteriorates.

Incidentally, the thickness of the metal sheet 2 and the kind of material of the metal sheet 2, and the means for integration of the layered rubber sheet 1' and the metal sheet 2 may be the same as in the examples shown in Figure 1 or 2. The size and shape of the fire-prevention sheet 3 is not restricted to the example of Figure 3, however, a roll of the sheet having a width from 40 to 100cm and a length from 10 to 20m is generally desirable in terms of productivity and facility of use.

The fire-prevention sheets mentioned above have fire spread prevention effects which can be evaluated by the steps described below.

As a first step in the evaluation, wires or cables of which all would be destroyed completely by fire in a burning test regulated by IEEE 383 for vertically set wires or cables are installed as a sample in a Steiner Tunnel horizontal fire test chamber shown in Figure 4.

A Steiner Tunnel horizontal fire test chamber is employed in ASTM E84-91 which assumes a fire in a tunnel or the like and is the most severe burning test.

If the fire-prevention sheet 3 is wound continuously or intermittently over a length of 4.5 m at approximately the center of wires and cables 4,4... having a length of 7.32m, which are installed on the tray 5 in a Steiner Tunnel horizontal fire test chamber, the fire-prevention sheet 3 of the present invention has a fire spread prevention effect exceeding the level that burning of wires and cables 4,4... stops on its own, and therefore, not all of the cable 4 is destroyed by fire after stopping the burner 6, as long as this burning test is done under the conditions listed below.
Quantity of heat from the burner 6: 150000BTU/hour
Burning time for the burner 6: 40 minutes
Velocity of air in the fireplace: 0.6m/second
Size of the tray 5: width = 285mm, length = 7.32m

The fire-prevention sheet 3 also has the fire spread prevention effect such that not all of a cable is destroyed by fire in another burning test, described hereinafter.

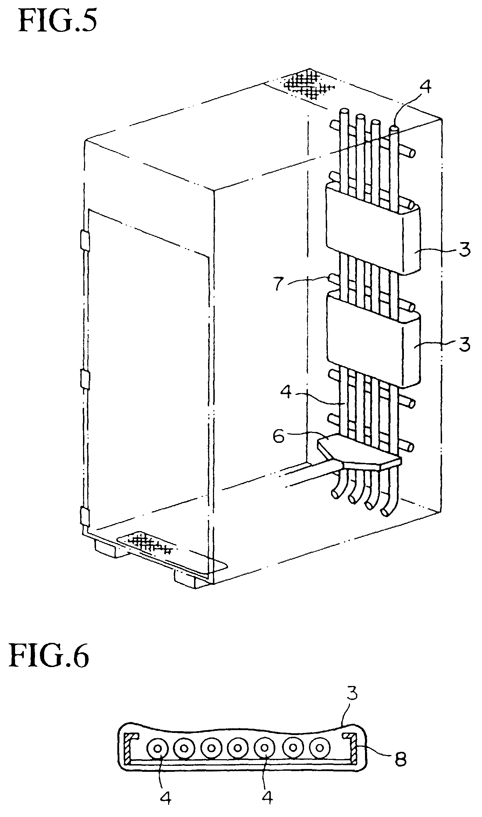

Namely, at first, a plurality of the wires and cables 4,4... of which all would be destroyed completely by fire in IEC332-3 category C, which is a burning test done in the apparatus shown in Figure 5 for vertically set wires and cables and sets conditions such as a 20 minute burning time for the burner 6 and a quantity of heat of 70000BTU/hour, are installed in the ladder 7 as a sample for the test. Next, the fire-prevention sheet 3 of the present invention is wound around the upper parts of the wires and cables 4,4... intermittently, as shown in the figure or continuously. The upper part of the cable 4 is above a line 30cm above the burner 6. Then, if a burning test of category A, which sets conditions such as a 40 minute burning time for the burner 6 and a quantity of heat of 70000BTU/hour, is carried out, the fire-prevention sheet 3 has a fire spread prevention effect such that not all of the cable 4 is destroyed by fire.

The rubber sheet 1 and the metal sheet 2 may be layered in the fire-prevention sheet of the present invention such that the rubber sheet 1 forms one surface and the metal sheet 2 forms the opposite surface of the fire-prevention sheet 3, and a radiation coefficient, which is the ratio of the thermal radiation to a black body, of each surface may be adjusted to be equal to or more than 0.5, as described in Claim 2, to facilitate thermal radiation. As a method to adjust the radiation coefficient on the surface of the metal sheet 2 to be equal to or more than 0.5, applying a paint having a dark color such as black, gray or black-blown; covering with a plastic film having the same colors as above; coating a rubber having the same colors as above; or roughening the surface of the metal sheet 2 by a sand blaster or the like can be employed. On the other hand, mixing black colorant like carbon black into the rubber mixture for the rubber sheet 1 is the most practical means to adjust the radiation coefficient on the surface of the rubber sheet 1 to be equal to or more than 0.5. However, another dark colored colorant may be mixed into the rubber mixture instead of or in addition to carbon black.

Also, the fire-prevention sheet of the present invention may be constructed such that one layered rubber sheet 1' and one metal sheet 2 are layered and integrated to form fire-prevention sheet 3, and an incombustible plastic film having a radiation coefficient equal to or more than 0.5 may be adhered onto the metal sheet 2, as described in Claim 8, to facilitate effective thermal radiation.

As the incombustible plastic film having a radiation coefficient equal to or more than 0.5, for example, a non-halogenated type incombustible plastic film which is manufactured from resin such as polyethylene and polypropylene, a plenty of inorganic compounds and their hydrates, such as aluminum hydroxide and magnesium hydroxide, and of which the color is adjusted to be dark such as black, black-gray, dark-gray or black-brown; or a non-halogenated type incombustible plastic film on which dark colored paint is applied can be used.

Hereafter, the method of use of the fire-prevention sheet will be explained.

First of all, the fire-prevention sheet 3 may be wound around at least one cable directly. In this case, the fire-prevention sheet 3 should be wound such that the rubber sheet 1 is inside and the metal sheet 2 is outside, respectively. One cable or a plurality of wires and cables can be surrounded. The fire-prevention sheet 3 may be wound along the cable to cover its full length, or may be wound intermittently along the cable. If the fire-prevention sheet 3 is wound intermittently, the length of the covered part should be equal to or more than 0.5m, preferably 1m, in order to sufficiently prevent spread of fire.

For a cable laid in a cable rack installed in a pipe space in a tunnel or a building, the fire-prevention sheet 3 may be wound around the whole of the cable rack 8 in which the wires and cables 4,4... are laid, as shown in Figure 6. In this case, the fire-prevention sheet 3 may also be wound intermittently along the wires and cables 4,4..., and it is enough to make the length of the covered part equal to or more than 0.5m-1m. It is also effective to fill the end or the center of the covered part with incombustible putty having an oxygen index equal to or more than 28 in order to close the space between the fire-prevention sheet 3 and wires and cables 4,4... .

One winding is sufficient for the fire-prevention sheet 3. However, the sheet 3 may be wound two or more times. When fixing the fire-prevention sheet 3, a wire or a tape for binding can be used, and this can provide sufficient strength.

If the fire-prevention sheet 3 is wound around wires and cables 4,4... or the cable rack 8 which contains them by a wrapping method with overlap, it is preferable to set the overlap width of the sheet 3 equal to or more than 3cm.

Incidentally, the fire-prevention sheet 3 may cover the wires and cables 4,4... or the cable rack 8 so that the longitudinal direction of the sheet 3 is parallel to the wires and cables 4,4... .

The fire-prevention sheet 3 does not readily burn in a fire because it is a multi-layered sheet consisting of a rubber sheet 1 or a layered rubber sheet 1', which have high resistance to fire, and the nonflammable metal sheet 2. Besides, gas which is generated by thermal decomposition when the wires and cables 4,4... are heated is confined in the space surrounded by the fire-prevention sheet 3, wherein inflow of air from the outside or outflow of the generated gas does not occur. Therefore, burning of the wires and cables 4,4... in the surrounded space and spread of fire can be prevented because the surrounded space will be in an oxygen depleted state.

If a rubber sheet 1 which can generate hydrogen chloride when burning is employed in the fire-prevention sheet 3, burning of the wires and cables 4,4... and spread of fire can be prevented with more certainty because the space between the fire-prevention sheet 3 and the wires and cables 4,4... is filled with not only said thermal decomposition gas but also an incombustible hydrogen chloride gas, thereby the degree of oxygen depletion state of the space is accelerated until the space contains no or little oxygen, whereas the rubber sheet 1 does not readily burn because its oxygen index is equal to or more than 28.

And, if the rubber sheet 1 is made from material such as a chloroprene rubber type mixture, which has the characteristic such that it is carbonized and hardened when burning, the rubber sheet 1 will be carbonized and hardened after burning, and the shape of the sheet will be maintained. Therefore, even if the rubber sheet 1 burns, the seal of the space between the wires and cables and the fire-prevention sheet will also remain and inflow of air from the outside will be prevented. Further, the carbonized and hardened material can insulate heat from the outside because it functions as a heat insulation material. Accordingly, burning of the wires and cables 4,4... can be prevented with more certainty as a result.

Incidentally, the carbonized and hardened material remaining after burning of the rubber sheet 1 does not drop onto the wires and cables 4,4... because it is adhered to the metal sheet 2.

In the case of a fire-prevention sheet in which the layered rubber sheet 1' is employed, heat from the outside can also be insulated effectively because the layered rubber sheet 1' will be expanded and hardened when it burns or is heated. Therefore, the seal of the wires and cables 4,4... will be maintained, and inflow of air from the outside will be prevented even if the sheet burns. And, the thermal decomposition or burning of the wires and cables will be restrained because the expanded and hardened sheet has the same function to insulate heat from the outside as a heat insulation material.

On the other hand, the metal sheet 2 keeps its shape even in a fire, thereby the space around wires and cables 4,4... is sealed and outflow of hydrogen halide to the outside is prevented. And, it reflects heat from the outside. Further, it can maintain an oxygen depletion state in the above space because it can prevent continuous outflow of thermal decomposition gas along the wires and cables.

The wires and cables 4,4... surrounded by the fire-prevention sheet 3 are prevented from burning because of complex and synergistic effects of various functions of the rubber sheet 1, the layered rubber sheet 1' and the metal sheet 2. Therefore, the fire-prevention sheet exhibits effective prevention effect on spread of fire because it does not act as a medium for the spread of fire.

In the case in which the radiation coefficient of the surface of the rubber sheet 1, layered rubber sheet 1' or the metal sheet 2 is equal to or more than 0.5, the heat generated by sending electric current does not remain in the space surrounded by the fire-prevention sheet 3 and is effectively radiated to the outside, which prevent heating of the wires and cables and deterioration of their electric current capacity.

If the rubber sheet 1 is made from mixture which does not generate hydrogen halide gas and the layered rubber sheet 1' does not generate hydrogen halide gas, the present invention is safer because there is no danger due to the gas.

Incidentally, the fire-prevention sheet 3 of the present invention can be recycled when the route for wires and cables 4,4... changes, for example, because its handling and application are easy and it can be easily removed and wound again.

The fire-prevention sheet 3 of the present invention is not restricted to the examples shown in Figure 1-3. Namely, it may be constructed by another layer combination of at least one rubber sheet 1 or layered rubber sheet 1' and at least one metal sheet 2.

If necessary, glass cloth may be incorporated into the rubber sheet 1. As the glass cloth, a chopped strand mat consisting of an ordinary glass fiber, roving cloth, yarn cloth and the like can be employed, and the quantity of the glass cloth in the rubber sheet 1 is set to be about 2-20v%.

Specific examples of the present invention will be described below.

### (Experimental Example 1)

15 patterns of a fire-prevention sheet 3 having the same cross section structure as shown in Figure 1 were prepared by layering and integrating a rubber sheet 1 and a metal sheet 2, which had the characteristics shown in Tables 1 and 2.

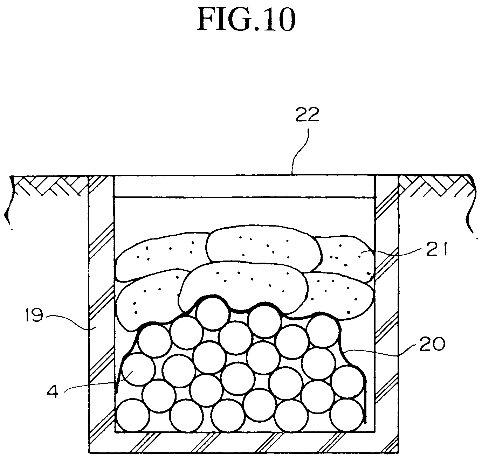

On the other hand, 10 wires and cables 4,4... of the type 600V CV 3C×38mm² were set side by side on the tray 5 having a width of 285mm and a length of 7.32m in a Steiner Tunnel horizontal fire test chamber shown in Figure 4, and 10 additional wires and cables 4,4... were set on the previously set 10 wires and cables 4,4... on the tray 5. It had been previously confirmed that all the wires and cables 4,4... were completely destroyed by fire in a burning test for vertically set wires and cables in IEEE383. The length of the wires and cables 4,4... was 7.32m, and the above fire-prevention sheet 3 was wound continuously with overlap from a first line 1.6m away from the burner 6 side edge of cable 4 to a second line 4.5m away from the first line.

The burning test was executed under the conditions such that the quantity of heat was 150000BTU/hour, the burning time was 40min and the speed of air in the fireplace was 0.6m/s. Then, the time necessary for the burning to stop on its own, the maximum length of the flame from the end of the sheet, the presence of fire on the exposed part of the cable 4 at the exit side and the presence of damage on the fire-prevention sheet 3 after burning were inspected.

The facility of winding the fire-prevention sheet 3 was also evaluated, in terms of whether it was heavy or whether it was hard, and sheets which were not easy to wind were marked "Poor" and sheets which were easy to wind were marked "Good".

The results are shown in Tables 1 and 2.

Incidentally, the melting points of both Pb and Sn, which were materials for the metal sheet, are less than 600°C.

**Table 1**

| Test Number | | 1 | 2 | 3 | 4 | 5 | 6 | 7 | 8 |
|---|---|---|---|---|---|---|---|---|---|
| Rubber sheet | Thickness (mm) | 0.1 | 0.1 | 1.0 | 2.0 | 3.0 | 0.5 | 1.0 | 0.5 |
| | Oxygen index | 40 | 35 | 30 | 30 | 30 | 35 | 28 | 35 |
| | Quantity of hydrogen halide (mg/g) | 50 | 80 | 100 | 150 | 0 | 100 | 100 | 350 |
| Metal Sheet | Thickness (µm) | 15 | 200 | 50 | 70 | 200 | 100 | 100 | 50 |
| | Material | Al | Al | Cu | SUS | SUS | Fe | SUS | Cu |
| Time necessary for burning to stop on its own(min) | | 108 | 115 | 104 | 95 | 88 | 102 | 96 | 92 |
| Maximum length of flame from end of the sheet (cm) | | 230 | 225 | 195 | 190 | 180 | 210 | 190 | 190 |
| Presence of fire on exposed parts | | No | No | No | No | No | No | No | No |
| Presence of damage to the sheet | | No | No | No | No | No | No | No | No |
| Facility of winding the sheet | | Good | Good | Good | Good | Good | Good | Good | Good |

**Table 2**

| Test Number | | 9 | 10 | 11 | 12 | 13 | 14 | 15 |
|---|---|---|---|---|---|---|---|---|
| Rubber sheet | Thickness (mm) | 0.05 | 0.1 | 3.0 | 2.0 | 3.0 | 5.0 | 3.0 |
| | Oxygen index | 40 | 35 | 26 | 35 | 30 | 40 | 24 |
| | Quantity of hydrogen halide (mg/g) | 100 | 100 | 100 | 80 | 100 | 80 | 80 |
| Metal Sheet | Thickness (µm) | 20 | 200 | 250 | 10 | 200 | 0 | 300 |
| | Material | Al | Pb | Cu | Al | Sn | | SUS |
| Time necessary for burning to stop on its own(min) | | Did not stop on its own | Did not stop on its own | Did not stop on its own | Did not stop on its own | Did not stop on its own | Did not stop on its own | Did not stop on its own |
| Maximum length of flame from end of the sheet (cm) | | Equal to or more than 500 | Equal to or more than 500 | Equal to or more than 500 | Equal to or more than 500 | Equal to or more than 500 | Equal to or more than 500 | Equal to or more than 500 |
| Presence of fire on exposed parts | | Yes | Yes | Yes | Yes | Yes | Yes | Yes |
| Presence of damage to the sheet | | Yes | Yes | Yes | Yes | Yes | Yes | Yes |
| Facility of winding the sheet | | Good | Good | Poor | Good | Good | Good | Poor |

The results shown in Tables 1 and 2 reveal that the fire-prevention sheet of the present invention has superior prevention effect against spread of fire and that the facility of winding it around wires and cables was high.

### (Experimental Example 2)

A rubber sheet(sample A) having a thickness of 1.5m and consisting of a chloroprene type mixture which contained carbon black, a layered sheet(sample B) wherein a metal sheet which was a stainless steel foil having a thickness of 0.2mm was joined onto the above rubber sheet, and a sheet (sample C) of which the radiation coefficient on both surfaces of the layered sheet was set to 0.85 by applying and drying an epoxy resin type black coating material on the surfaces were prepared as sample sheets.

A 600V CV 3C×38mm² cable was used in this experiment. Three sets of double bundles of 10 lined wires and cables were prepared, and each of the sets was surrounded by each of the three kinds of sample sheets (samples A-C), respectively. The temperature of the conductor in the cable was measured under the conditions that the atmospheric temperature was 40°C and the electric current was 70A.

The temperature of the conductor in the cable surrounded by samples A, B and C was about 91°C, 105°C and 92°C, respectively, after 4 hours of applying electric current.

The results reveal that the sheet of sample C facilitated radiation of heat from the inside of a cable, thereby the temperature increase of a conductor in the cable surrounded by the sheet can be reduced because the heat generated by the electric current is conducted to the outside and does not stay in the inner space around the cable, and that the deterioration of the electric current capacity of the cable is slight.

### (Experimental Example 3)

13 patterns of a fire-prevention sheet 3 having the same cross section structure as shown in Figure 1 were prepared by layering and integrating a rubber sheet 1 and a metal sheet 2, which had the characteristics shown in Tables 3 and 4.

On the other hand, 20 parallel wires and cables 4,4... of the type 66000 CV 1C×38mm² were vertically set on the tray 5 in a test apparatus for burning test regulated in IEC332-3 for vertically set wires and cables. The height of the cable was 350cm. It had been previously confirmed that all the wires and cables were completely destroyed by fire in a burning test regulated in IEC 332-3 category C, which corresponds to burning conditions in which the burning time for a burner is 20 minutes and the quantity of heat from the burner is 70000BTU/hour.

The above fire-prevention sheet 3 was wound around the wires and cables continuously without overlapping in the range from the first line being 30cm above the burner 6 to the second line being 80cm away from the first line.

The burning test was executed under the conditions regulated in IEC332-3 category A, which corresponded to the conditions that the quantity of heat was 7000BTU/hour and the burning time for the burner 6 was 40min. Then, a length of the damaged parts of the wires and cables and the presence of the peeled parts of the fire-prevention sheet 3 after the burning were inspected.

The facility of winding the fire-prevention sheet 3 was also evaluated in terms Of whether the fire-prevention sheet 3 was heavy or whether it was hard, and sheets which were not easy to wind were marked "Poor" and sheets which were easy to wind were marked "Good".

The results are shown in Tables 3 and 4.

Incidentally, the melting points of both Pb and Sn, which were materials for the metal sheet, are less than 600°C.

**Table 3**

| Test Number | | 1 | 2 | 3 | 4 | 5 | 6 |
|---|---|---|---|---|---|---|---|
| Rubber sheet | Thickness (mm) | 0.1 | 0.1 | 1.0 | 2.0 | 3.0 | 0.5 |
| | Oxygen index | 40 | 35 | 35 | 35 | 28 | 35 |
| | Quantity of hydrogen halide (mg/g) | Equal to or more than 80 | Equal to or more than 80 | Equal to or more than 80 | Equal to or more than 80 | Equal to or more than 80 | Equal to or more than 80 |
| Metal Sheet | Thickness (µm) | 25 | 200 | 50 | 70 | 200 | 100 |
| | Material | Al | Al | Cu | SUS | SUS | Fe |
| Lengths of damaged parts(cm) | | 150 | 120 | 80 | 60 | 40 | 90 |
| Presence of peeled parts | | No | No | No | No | No | No |
| Facility of winding the sheet | | Good | Good | Good | Good | Good | Good |

**Table 4**

| Test Number | | 7 | 8 | 9 | 10 | 11 | 12 | 13 |
|---|---|---|---|---|---|---|---|---|
| Rubber sheet | Thickness (mm) | 0.05 | 0.1 | 3.0 | 2.0 | 3.0 | 5.0 | 3.0 |
| | Oxygen index | 40 | 35 | 28 | 35 | 28 | 40 | 26 |
| | Quantity of hydrogen halide (mg/g) | Equal to or more than 80 | Equal to or more than 80 | Equal to or less than 70 | Equal to or more than 80 | Equal to or more than 80 | Equal to or more than 80 | Equal to or more than 80 |
| Metal Sheet | Thickness (µm) | 20 | 200 | 250 | 20 | 200 | 0 | 300 |
| | Material | Al | Pb | Cu | SUS | Sn | | SUS |
| Length of damaged parts(cm) | | All of the cable were damag ed by fire | All of the cable were damag ed by fire | All of the cable were damag ed by fire | All of the cable were damag ed by fire | All of the cable were damag ed by fire | All of the cable were damag ed by fire | All of the cable were damag ed by fire |
| Presence of the peeled part | | Yes | Yes | No | Yes | Yes | Yes | Yes |
| Facility of winding the sheet | | Good | Good | Poor | Good | Good | Good | Poor |

The results shown in Tables 3 and 4 reveal that the fire-prevention sheet of the present invention has superior prevention effect against spread of fire and that the facility of winding it around wires and cables was high.

### (Experimental Example 4)

9 patterns of a fire-prevention sheet 3 having the same cross section structure as shown in Figure 3 were prepared by layering and integrating a layered rubber sheet 1' and a metal sheet 2, which had the characteristics shown in Table 5.

Here, all patterns of the layered rubber sheet 1' were manufactured by applying and drying a coating material of ethylene-vinyl acetate copolymer type and heat expandable rubber mixture on both surfaces of staple fiber fabric having a thickness of 0.2mm. The oxygen index and the expansion ratio of the layered rubber sheet 1' were varied by the quantities of inorganic compounds and their hydrates, and expanding agent in the mixture, and the thickness of the layered rubber sheet 1' was varied by the number of applications of the coating material.

On the other hand, 10 parallel wires and cables 4,4... of the type 600V CV 3C×38mm² were set on the tray 5 having a width of 285mm and a length of 7.32m in a Steiner Tunnel horizontal fire test chamber shown in Figure 4, and 10 additional wires and cables 4,4... were set on the other 10 wires and cables 4,4... previously set on the tray 5. It had been previously confirmed that the cable 4 was completely destroyed by fire in a burning test for vertically set wires and cables in IEEE383. The length of the cable 4 was 7.32m, and the above fire-prevention sheet 3 was wound continuously with an overlap, from a first line 1.6m away from the burner 6 side edge of cable 4 to a second line 4.5m away from the first line.

The burning test was executed under the conditions such that the quantity of heat was 150000BTU/hour, the burning time was 40min and the speed of air in the fireplace was 0.6m/s. Then, the time necessary for the burning to stop on its own, the maximum length of the flame from the end of the sheet, the presence of fire on the exposed part of the cable 4 at the exit side and the presence of damage on the fire-prevention sheet 3 after burning were inspected.

The facility of winding the fire-prevention sheet 3 was also evaluated in terms of whether the fire-prevention sheet 3 was heavy or whether it was hard, and sheets which were not easy to wind were marked "Poor" and sheets which were easy to wind were marked "Good".

The results are shown in Table 5.

Incidentally, the melting points of both Pb and Sn, which were materials for the metal sheet, are less than 600°C.

**Table 5**

| Test Number | | 1 | 2 | 3 | 4 | 5 | 6 | 7 | 8 | 9 |
|---|---|---|---|---|---|---|---|---|---|---|
| Rubber sheet | Thickness (mm) | 0.2 | 0.2 | 0.2 | 2.0 | 0.5 | 0.5 | 0.5 | 0.5 | 3.0 |
| | Oxygen index | 55 | 45 | 26 | 26 | 35 | 35 | 32 | 32 | 30 |
| | Expansion Ratio | 12 | 14 | 16 | 16 | 16 | 2 | 4 | 4 | 16 |
| Metal Sheet | Thickness (µm) | 15 | 15 | 15 | 15 | 100 | 100 | 100 | 200 | 200 |
| | Material | Al | Al | Al | Al | SUS | SUS | SUS | Sn | Sn |
| Time necessary for burning to stop on its own(min) | | 103 | 98 | Did not stop on its own | Did not stop on its own | 96 | Did not stop on its own | 105 | Did not stop on its own | Did not stop on its own |
| Maximum length of flame from end of the sheet (cm) | | 200 | 195 | Equal to or more than 500 | Equal to or more than 500 | 190 | Equal to or more than 500 | 210 | Equal to or more than 500 | Equal to or more than 500 |
| Presence of fire on the exposed parts | | No | No | Yes | Yes | No | Yes | No | Yes | Yes |
| Presence of damage to the sheet | | No | No | Yes | Yes | No | No | No | Yes | Yes |
| Facility of winding the sheet | | Good | Good | Good | Good | Good | Good | Good | Good | Good |

The results shown in Table 5 reveal that the fire-prevention sheet of the present invention has superior prevention effect against spread of fire and that the facility of winding it around wires and cables was high.

### (Experimental Example 5)

A fire-prevention sheet (sample A) which was used in Test Number 4 of Experimental Example 4, a layered sheet(sample B) which is a constituent of the above fire-prevention sheet, and a modified fire-prevention sheet(sample C) manufactured by layering and integrating an incombustible plastic film having a radiation coefficient of 0.85 and a thickness of 0.1mm on a metal sheet side surface of the above fire-prevention sheet were prepared as sample sheets.

A 6000 CV 3C×38mm² cable was used in this experiment. Three sets of double bundles of 10 lined wires and cables were prepared, and each of sets was surrounded by each of the three kinds of the sample sheets (sample A-C), respectively. The temperature of the conductor in the cable was measured under the conditions that the atmospheric temperature was 40°C and the electric current was 70A.

The temperature of the conductor in the cable surrounded by the sample B, A and C was about 89°C, 105°C and 90°C, respectively, after 4 hours of applying electric current.

The results reveal that the sheet of sample C facilitated radiation of heat from the inside of a cable, thereby the temperature increase of a conductor in the cable surrounded by the sheet can be reduced because the heat generated by the electric current is conducted to the outside and does not stay in the inner space around the cable, and that the deterioration of the electric current capacity of the cable is slight.

It should be noted that the metal sheet 2 of the fire-prevention sheet 3 must be grounded in order to prevent electric shock when the fire-prevention sheet 3, shown in Figure 1 for example, is fitted onto wires or cables laid in a tunnel or an underground construction such as a culvert, because the metal sheet 2 is exposed on the surface of the fire-prevention sheet 3.

The fitting process of the fire-prevention sheet 3 in such situations is so difficult that problems such as reduced operation efficiency and increased costs for execution can be expected. Further, the operator may be injured by being cut by the edge of the fire-prevention sheet 3.

The fitting method of the present invention does not need grounding for the metal sheet, and can enhance the operation efficiency and safety. It will be explained in detail hereinafter.

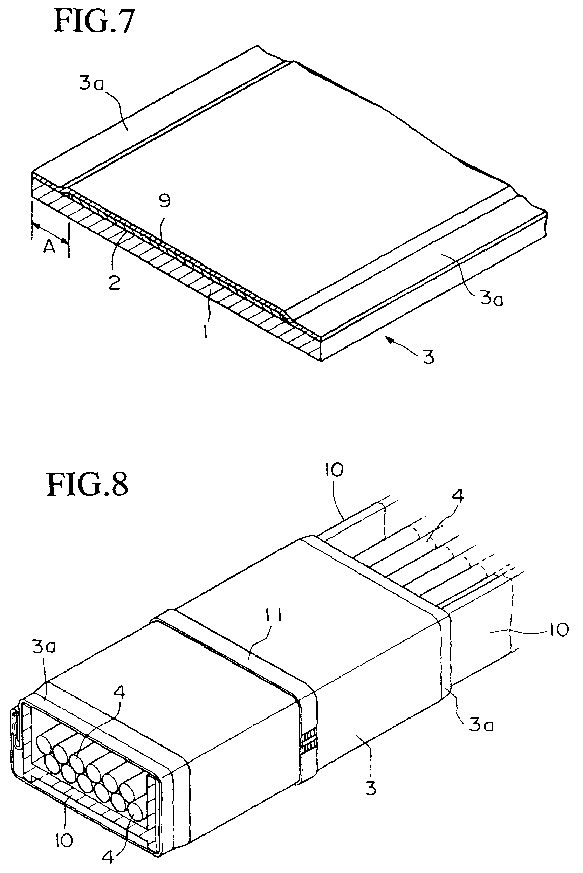

Figure 7 shows an example of a fire-prevention sheet used in the fitting method of the present invention. In the figure, 1 is the rubber sheet on which the metal sheet 2 is layered. The dark colored corrosion-resistant film 9 is further layered on the metal sheet 2, and all of the sheets and the film are integrated to form the fire-prevention sheet 3.

The rubber sheet 1 and the metal sheet 2 are the same as the rubber sheet 1 and the metal sheet which constitute the fire-prevention sheet shown in Figure 1. Therefore, the details of the sheets are omitted.

As the dark colored corrosion-resistant film 9, a film consisting of plastic or rubber such as polyethylene, polyvinyl chloride, polyvinylidene chloride, ethylene-vinyl acetate, natural rubber, chloroprene rubber and butyl rubber, having a color such as black, gray or black-brown and a thickness of 20-100µm can be employed.

A dark colored corrosion-resistant film 9 having high resistance to corrosion, and which is not combustible is preferable. Therefore mixing of halogenized or non-halogenized fire retardant is desirable.

Further, it is preferable to make the radiation coefficient, which is the ratio of thermal radiation to a black body, on the surface of the dark colored corrosion-resistant film 9, equal to or more than 0.5 in order to facilitate heat radiation.

Integrating the rubber sheet 1, the metal sheet 2 and the dark colored corrosion-resistant film 9 after they are layered can be easily done by means of adhesive such as a rubber type adhesive.

A rectangular shape is preferable for the fire-prevention sheet 3 shown in Figure 7, and a roll of the sheet with a width from 40 to 100cm and a length from 10 to 20m is desirable in terms of productivity and facility of use.

In the above fire-prevention sheet 3, the edge of the metal sheet 2 is located further inside than the edge of the rubber sheet 1 and the dark colored corrosion-resistant film 9 along both long sides 3a,3a of the fire-prevention sheet 3, and therefore the rubber sheet 1 and the dark colored corrosion-resistant film 9 are in direct contact. The direct contact part forms a border. The width A of the border in which the rubber sheet 1 and the dark colored corrosion-resistant film 9 contact each other directly is equal to or more than 2mm, preferably in the range of about 5-20mm.

In the fire-prevention sheet 3, the surface or edge of the metal sheet 2 is not exposed along the both long sides 3a,3a of the sheet 3 because of the structure mentioned above. However, along both short sides of the fire-prevention sheet 3, the edges of the metal sheet 2 are exposed to the outside as a result of cutting in the manufacturing process.

The fire-prevention sheet 3 shown in Figure 7 has the same prevention effect as the fire-prevention sheets 3 shown in Figures 1-3.

Next, the fitting method of the fire-prevention sheet 3 of the present invention is explained based on Figure 8. A electric cable installed in a cable rack will be considered as the long object to be fitted.

In Figure 8, numeral 10 designates a cable rack which is mounted along the inside of a construction such as a tunnel by attachments which are not shown in the figure. A plurality of wires or cables 4,4... are installed on the cable rack 10 so that they extend along the cable rack 10. The fire-prevention sheet 3 mentioned above is wound in accordance with the fitting method described below.

First, a long fire-prevention sheet 3 is cut across the sheet to cut it into a certain length. The fire-prevention sheet 3 is wound around the cable rack 10 so that the edges of the long sides 3a,3a of the fire-prevention sheet 3 crosses at about a right angle to the long axis of the cable rack 10 or cable 4, and so that the cross section view of the fire-prevention sheet 3 forms square or rectangle.

Second, the lower edge of the short side of the fire-prevention sheet 3 is folded up by 90° and then folded down by 180° so that the lower edge faces the side of the cable rack 10 and forms a hook shape. On the other hand, the upper edge of the other short side of the fire-prevention sheet 3 is also folded down by 90° and folded up by 180° so that the upper edge faces the outside and forms another hook shape which approximately has rotational symmetry with the hook shape formed by the lower edge.

Then, these two hook shapes are engaged and overlapped with each other as shown in the figure.

The width of the overlap of both edges is equal to or more than 3cm, 5-10cm preferably, in order to make the engagement of the edges sufficient.

Next, the wound fire-prevention sheet 3 is fixed to the cable rack by binding it with the band 11, such as a stainless belt. Incidentally, both edges of the short side of the fire-prevention sheet 3 may be folded prior to winding around the cable rack 10.

As described above, the long cable rack 10 is wound with a plurality of the fire-prevention sheets 3. Both continuous winding with overlap and intermittent winding with certain intervals can be employed. However, even the intermittent winding is enough to prevent spread of fire if the length of wound part is equal to or more than 0.5m, preferably 1m.

It is also effective to fill the end or central part of the wound fire-prevention sheet 3 with incombustible putty having an oxygen index equal to or more than 28 in order to seal the space between the fire-prevention sheet 3 and wires or cables 4,4... .

Direct winding around the cable 4 in accordance with the steps mentioned above is, of course, also possible.

The wires or cables 4,4... surrounded by the fire-prevention sheet 3 as shown in Figure 7 are prevented from burning and do not act as a medium for the spread of fire because the sheet, which is a layered sheet consisting of a rubber sheet 1 having high incombustibility and a nonflammable metal sheet 2, has the same function and effect as the fire-prevention sheet 3 shown in Figure 1. Therefore, the fire-prevention sheet 3 exhibits high prevention effect on spread of fire.

The metal sheet 2 is not exposed at the edges of the long sides 3a,3a and the surface of the fire-prevention sheet 3. Therefore, grounding of the metal sheet 2 can be omitted if all surfaces of the metal sheet 2 are covered with corrosion-resistant rubber or film, which prevents the surfaces from exposure to the outside, by another appropriate treatment along the edges of the short sides of the fire-prevention sheet 3.

If the radiation coefficient on the surface of the dark colored corrosion-resistant film 9 is equal to or more than 0.5, the heat generated by sending electric current does not remain in the space surrounded by the fire-prevention sheet 3 and is effectively radiated to the outside, which prevents a rise of the temperature of the wires or cables and deterioration of their electric current capacity.

Further, if the rubber sheet 1 is made from a mixture which does not generate hydrogen halide gas, the present invention is safer because there is no danger due to the gas.

In the fitting method mentioned above, both edges of the short side of the fire-prevention sheet 3 wound around the object to be surround are folded inside, and engaged with each other, which prevents exposure of the edges to the outside. Therefore, the installation in a tunnel and the like is facilitated, because no grounding for the metal sheet 2 is necessary, because the metal sheet 2 is not exposed to the outside.

Incidentally, the fire-prevention sheet 3 shown in Figure 7 can be recycled by removing and re-winding it when the laying route for an object to be surrounded changes, for example, because the handling for winding and the installation of the sheet are easy.

The fire-prevention sheet 3 of the present invention may be constructed by another layer combination of at least one rubber sheet 1 and at least one metal sheet 2, other than the example shown in Figure 7.

If necessary, glass cloth may be incorporated into the rubber sheet 1. As the glass cloth, a chopped strand mat consisting of ordinary glass fibers, roving cloth, yarn cloth and the like can be employed, and the quantity of the glass cloth in the rubber sheet 1 is set to be about 2-20v%.

Further, a corrosion-resistant film coated with dark colored paint can be employed as a dark colored corrosion-resistant material other than the above film 9.

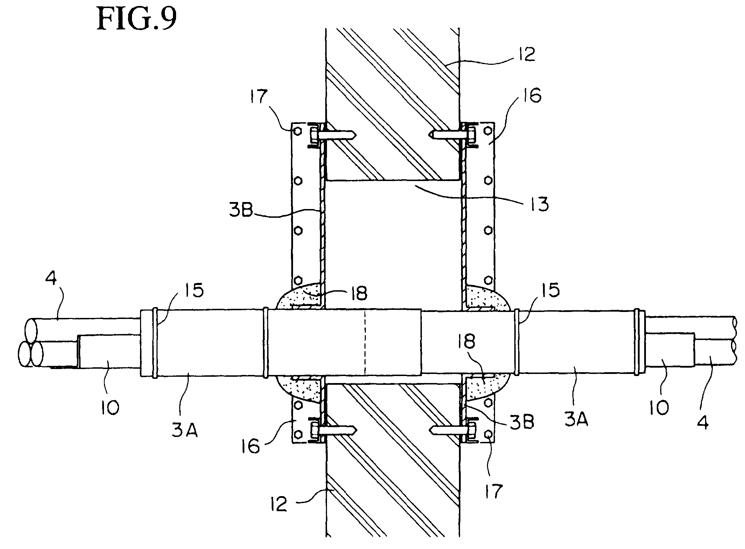

Next, an example of a fire-prevention structure wherein the fire-prevention sheet 3 of the present invention is employed will be explained based on Figure 9. An example of a fire-prevention structure at a perforated part of wall in a fire zone is shown in Figure 9

In the figure, numeral 12 designates a fireproof wall made of concrete or the like, and the fireproof wall 12 has the perforated part 13 with a for-sided section. The size of the cross section of the perforated part 13 is usually equal to or more than 0.6m².

A plurality of wires or cables 4,4... are laid on the cable rack 10 set in the perforated part 13. The first fire-prevention sheet 3A is wound around the wires or cables 4,4... which are located in the perforated part 13. The first fire-prevention sheet 3A, which is the same as the fire-prevention sheet 3 shown in Figure 1 or 3, is wound so that the incombustible rubber sheet 1 or the layered rubber sheet 1' faces inside and the metal sheet 2 faces outside.

The winding of the first fire-prevention sheet 3A is executed as follows. Two sheets of the first fire-prevention sheet 3A with a predetermined size are inserted into the perforated part 13 from each opening on the fireproof wall 12 until the overlap of the two first fire-prevention sheets 3A has a length of 10-20cm near the center of the fireproof wall 12. When this condition is met, the two first fire-prevention sheets 3A are wound right angles to the wires or cables 4,4... and the edges of the first fire-prevention sheets 3A are layered with each other to form the connected portion 14. Thereby, a sealed cylindrical space is formed by the sheets which are bound by stainless steel bands 15,15 later.

On the other hand, two flat sheets of the second fire-prevention sheet 3B are fitted onto the both openings of the perforated part 13 in the fireproof wall 12 so that the sheets cover the openings of perforated part 13 and contact the first fire-prevention sheets 3A surrounding wires or cables 4,4... . The fitting of the second fire-prevention sheets 3B is executed by fixing the edges of the second fire-prevention sheet 3B along periphery of the perforated part 13 mechanically with C type channel steels 16,16... and concrete bolts 17,17... . The second fire-prevention sheet 3B is fitted so that the incombustible rubber sheet 1 or the layered rubber sheet 1' faces inside and the metal sheet 2 faces outside.

At a contact part wherein the edge of the second fire-prevention sheet 3B contacts at an approximately right angle the first fire-prevention sheet 3A surrounding wires or cables 4,4... cylindrically, the edge of the second fire-prevention sheet 3B is folded by a width of 2-5cm to form "L" shape and the folded portion is piled on the first fire-prevention sheet 3A. Any gaps formed in the contact part are filled with a non-hardening type heat-resistant sealing material 18 and the folded portions are covered with the same material.

Here, the non-hardening type heat-resistant sealing material 18 is a putty material made from a non-cured rubber such as polychloroprene, a filler, fire retardant and stabilizer. It has high incombustibility because it has an oxygen index equal to or more than 80, and high fire-resistance ability because it forms a solid layer if it is heated to a high temperature. Further, it is sufficiently non-hardening type to be easy to handle and remove. For example, "F seal" (the name of the goods), which has been sold by the applicant, can be used.

In this example, the non-hardening type heat-resistant sealing material 18 is also used in portions such as the part where the second fire-prevention sheet 3B is fixed to the fireproof wall 12 and the space between the wires or cables 4,4... and the end of the first fire-prevention sheet 3A. The sealing material 18 may be filled into all or a part of the space surrounded by the first fire-prevention sheet 3A.

A fire-prevention structure like the one mentioned above can be done easily and speedily installed. Namely, the first and second fire-prevention sheets 3A and 3B can be easily prepared by cutting the original fire-prevention sheet 3 with scissors or the like. And, the installation can be completed with only the step of surrounding the cable rack 10 and wires or cables 4,4... with the first fire-prevention sheet 3A and covering the openings of the perforated part 13 on the fireproof wall 12 by the second fire-prevention sheet 3B, and the step of setting the non-hardening type heat-resistant sealing material 18 at appropriate places.

Further, if the number of wires or cables 4,4... passong through the perforated part 13 increases, the installation is not difficult because all the wires or cables 4,4... will be completely surrounded by the first fire-prevention sheet 3A.

Further, it is not necessary to fill all the space in the perforated part 13, therefore labor can be reduced if all the space is not completely filled.

Furthermore, when installing more wires or cables, removing wires or cables, changing wires or cables or the like, the sealing material 18 can be easily removed because hardening type sealing material is not used in this structure. And, such operations can be easily executed only by unbinding the stainless steel bands 15,15... and opening the second fire-prevention sheet 3B to release the cable rack 10.

The fire-prevention sheet 3 has a high fire spread prevention effect, as mentioned before. If stainless steel is employed as the metal sheet, this fire-prevention structure can maintain its fire prevention effect for 2 hours, which is approximately the same as conventional fire-prevention structures, although it is simpler than conventional ones.

The same fire-prevention structure of the present invention can be employed at perforated parts of a floor or distributing board, and it can exhibit superior fire-prevention effects.

And, needless to say, the fire-prevention structure of the present invention for perforated parts can be adopted even if the wires or cables 4,4... are not only electric wires or cables but also control or communication wires or cables.

Hereunder, another example of the fire-prevention structure of the present invention will be explained in detail referring to Figure 10.

In Figure 10, numeral 19 designates a pit. A plurality of wires or cables 4,4... installed in the pit 19 are surrounded by the fire-prevention sheet 20 on which sand bags 21 are placed, and the pit 19 is closed by the pit cover 22.

The sand bags 21 are laid on both ends of the fire-prevention sheet 20 surrounding a plurality of wires or cables 4,4... installed in the pit 19, which is not shown in the figure.

The pit 19 is to keep wires Or cables 4,4... in a pit system which is a laying method for electric wires or cables buried under ground, which is constructed of concrete or the like under the ground for the installation of the wires or cables 4,4... .

On the other hand, the fire-prevention sheet 20 surrounds the whole of a plurality of wires or cables 4,4..., by being wrapped around the outermost of the wires or cables 4,4... installed in the pit 19, as shown in Figure 10. The fire-prevention sheet 2 may surround the wires or cables 4,4... continuously or intermittently over the full length of the cable 4 and along the axis of the cable 4.

If the fire-prevention sheet 3 surrounds the wires or cables intermittently, the length of the surrounded part of the wires or cables is not restricted as long as it is equal to or more than 0.5m. However, it is preferable for the length to be in the range of 2.0-5.0m because sufficient fire-prevention effects can be obtained and handling of the sheet is easy if the length of the sheet is in this range. Incidentally, it is not preferable for the length of the surrounded part of the wires or cables to be less than 0.5m, because sufficient fire spread prevention effect can not be obtained.

The sand bags are laid on the fire-prevention sheet 21 to press the fire-prevention sheet 20 and are set in a range of from the edge of the fire-prevention sheet 20 to 0.5m away from the edge. The sand bags 21 are sacks or the like filled with sand, and are easy to carry because the sand can be handled in lumps.

As the fire-prevention sheet 20, the fire-prevention sheet 3 shown in the Figure 1 or 3 can be employed. And, if such a sheet is employed, the sheet is set so that either a rubber sheet 1 or a layered rubber sheet 1' forms the front surface, on the other hand, a metal sheet 2 forms the back surface of the fire-prevention sheet 20.

The radiation coefficient (the ratio of thermal radiation to a black body) on each surface of the metal sheet 2, the rubber sheet 1 or the layered rubber sheet 1' may be adjusted to be equal to or more than 0.5 in order to facilitate heat radiation. As the method to adjust the radiation coefficient on the surface of the metal sheet 2 to be equal to or more than 0.5, application of dark colored paint having a color such as black, gray or black-blown, attachment of a dark colored plastic film having the same color as mentioned above, a coat of dark colored rubber having the same color as mentioned above and roughening treatment by a sand blaster or the like are listed. On the other hand, as the method to adjust the radiation coefficient on the surface of the rubber sheet 1 or the layered rubber sheet 1' to be equal to or more than 0.5, use of a rubber mixture containing a black colorant such as carbon black as a material for the sheet is most practical, however, another colorant to provide a dark color other than black may be included.

In a fire-prevention structure for wires or cables such as that mentioned above, the fire-prevention sheet 20 can prevent the wires or cables from burning even in a fire because the wires or cables 4,4... installed in the pit 19 are surrounded by the fire-prevention sheet 20.

And, the wires or cables 4,4... can be protected from physical damage from outside because the wires or cables 4,4... are covered with the fire-prevention sheet 20.

In the fire-prevention structure of the present invention, a plurality of wires or cables 4,4... installed in the pit 19 are surrounded entirely by the fire-prevention sheet 20. However, an increase in the temperature of conductors in the wires or cables 4,4... and the deterioration of the electric current capacity in the wires or cables 4,4... can be avoided if both ends of the fire-prevention sheet 20 are opened to the outside, because the heat generated by electric current supply will not tend to remain in the space surrounded by the fire-prevention sheet 20 and will be radiated to the outside effectively.

Further, if either of the rubber sheet 1 or the layered rubber sheet 1' and the metal sheet 2, of which the radiation coefficient on each surface is equal to or more than 0.5, are used as the constituents of the fire-prevention sheet 20, an increase of the temperature of conductors in the wires or cables 4,4... and the deterioration of the electric current capacity in the wires or cables 4,4... can be avoided with more certainty because the heat generated by electric current supply to the wires or cables 4,4... under normal conditions will not tend to remain in the space surrounded by the fire-prevention sheet 20.

The fire-prevention structure of the present invention presents the wires or cables 4,4... from burning in a fire by use of the fire-prevention sheet 20. Therefore, a supply of sand to extinguish a fire is not necessary, in contrast to a conventional structure in which the burning of wires or cables is prevented by sand filled in a pit, so that labor for supplying or removing sand when carrying out fire-prevention treatments and exchanging or installing wires or cables, can be reduced.

Further, inconveniences such as sand scatter around the pit 19 can avoid and execution efficiency becomes high, for example, when laying or removing the fire-prevention sheet 20 because sand bags 21 are used to press the fire-prevention sheet 20 in the fire-prevention structure of the present invention.

### Industrial applicability

As explained above, the fire-prevention sheet of the present invention exhibits superior fire spread prevention effect due to prevention of burning of wires or cables when it is wound around the wires or cables. It is easy to wind the fire-prevention sheet around wires or cables, and to remove it from the wires or cables. Besides, recycled use of the sheet is possible. And, the electric current capacity of wires or cables surrounded by the fire-prevention sheet does not deteriorate in normal conditions.

If a rubber sheet or a layered rubber sheet, which consists of a material with no hydrogen halide generation ability, is used, the fire-prevention sheet does not generate poisonous hydrogen halide or corrode metal components when burning.

The fitting method of the present invention does not expose any part of the metal sheet side of the fire-prevention invention fitted to a long object such as a cable and a corrosion-resistant gas pipe to the outside. When the above fire-prevention sheet is fitted to an object to be laid under the ground by this fitting method, therefore, it is possible to omit grounding of the metal sheet, to provide safe handling, to simplify the entire installation, and to restrain increases of costs for the installation.

Accordingly, the fire-prevention sheet and the fitting method of the present invention are useful for laying of wires or cables in a tunnel, buildings or the like with a cable rack.

The fire-prevention structure of the present invention has the effects that installation of the structure can be done easily, speedily and at low cost because it is simple. However, it exhibits the same fire-prevention function as the conventional structure. The fire-prevention structure has an another effect, in that it can allow install or removal of wires or cables flexibly and easily, and that the fire-prevention function does not vary widely because the execution of the structure is simple and easy.

A fire-prevention structure wherein wires or cables installed in a pit or a metal duct are surrounded by a fire-prevention sheet can prevent the wires or cables from burning in a fire and acting as mediums which accelerate the spread of fire.

And, in the above structure, the electric current capacity is less likely to deteriorate because heat generated by applying an electric current does not remain in the space surrounded by the fire-prevention sheet and will be radiated efficiently to the outside, which restrain increases in the temperature of the conductors in wires or cables.

Further, the above structure can protect the wires or cables from physical damage from outside because the surfaces of the wires or cables is covered with the fire-prevention sheet.

Furthermore, the above structure does not require sand, which is filled into a pit or the like for fire-prevention in a conventional method, for fire-prevention of the wires or cables. Therefore, high operation efficiency and superior facility of execution will be obtained by the above structure when providing a new fire-prevention function to wires or cables and exchanging or installing wires or cables, for example.

Incidentally, if sand bags are laid on the fire-prevention sheet, inconveniences such as sand scattering around the surroundings of the wires or cables when installing or removing the fire-prevention sheet, for example, are less likely to happen, and handling of the sand becomes easy.

Accordingly, the fire-prevention structure of the present invention is useful for laying wires or cables in a perforated part of a wall, a floor or the like in a fire-prevention zone, and laying wires or cables in a pit or the like under ground.

## Claims

1. A fire-prevention sheet in which at least one rubber sheet having an oxygen index equal to or more than 28, a thickness of 0.1-3mm and a hydrogen halide gas generation ability of 0-350mg/g, and at least one metal sheet having a thickness of 15-200µm are layered.

2. A fire-prevention sheet in which at least one rubber sheet having an oxygen index equal to or more than 28, a thickness of 0.1-3mm and a hydrogen halide gas generation ability of 0-350mg/g, and at least one metal sheet having a thickness of 15-200µm are layered and adhered, where the rubber sheet forms one surface of the fire-prevention sheet and the metal sheet forms the other surface, and the radiation coefficient of each surface is equal to or more than 0.5.

3. A fire-prevention sheet according to Claim 1 or 2, wherein the rubber mixture constituting the rubber sheet is either a polyolefine type mixture or polychloroprene type mixture.

4. A fire-prevention sheet in which at least one rubber sheet having an oxygen index equal to or more than 28, a thickness of 0.1-3mm and a hydrogen halide gas generation ability equal to or more than 80mg/g, and at least one metal sheet having a thickness of 25-200µm are layered.

5. A fire-prevention sheet according to Claim 4, having the fire spread prevention effect exceeding the level that not all of a sample cable is destroyed by fire in the IEC332-3 category A, which is a burning test regulated for a vertically set cable, under the conditions that the fire-prevention sheet is continuously or intermittently wound around a part of the sample cable of which all would be completely destroyed by fire if it were used as a sample in the IEC332-3 category C, said part being above a line equal to or more than 30cm above a burner.

6. A fire-prevention sheet according to Claim 4, wherein the rubber mixture constituting the rubber sheet is a polychloroprene type mixture.

7. A fire-prevention sheet in which at least one layered rubber sheet having an oxygen index equal to or more than 28, a thickness of 0.2-3mm and no hydrogen halide gas generation ability, which is manufactured by applying a heat expandable rubber mixture in expectation of an expansion ratio equal to or more than 4 onto both surfaces of a fabric having a thickness of 0.1-0.5mm, and at least one metal sheet having a thickness of 15-200µm are layered.

8. A fire-prevention sheet in which at least one layered rubber sheet having an oxygen index equal to or more than 28, a thickness of 0.2-3mm and no hydrogen halide gas generation ability, which is manufactured by applying a heat expandable rubber mixture in expectation of an expansion ratio equal to or more than 4 onto both surfaces of a fabric having a thickness of 0.1-0.5mm, and at least one metal sheet having a thickness of 15-20µm are layered, where an incombustible plastic sheet having a radiation coefficient equal to or more than 0.5 is attached to the surface of the metal sheet.

9. A fire-prevention sheet according to Claim 7 or 8, wherein the heat expandable rubber mixture constituting the layered rubber sheet is an ethylene-vinyl acetate copolymer type rubber mixture.

10. A rectangular fire-prevention sheet in which a rubber sheet having an oxygen index equal to or more than 28, a thickness of 0.1-3mm and a hydrogen halide gas generation ability of 0-350mg/g is covered with a metal sheet having a thickness of 15-350µm, and a dark colored corrosion-resistant material is layered onto the metal sheet, characterized in that the edge of the metal sheet is located further inside than the edge of the rubber sheet and the dark colored corrosion-resistant material, and therefore the rubber sheet and the dark colored corrosion-resistant material are in direct contact along the long side of the fire-prevention sheet.

11. A rectangular fire-prevention sheet according to Claim 10, characterized in that the width of the direct contact part of the rubber sheet and the dark colored corrosion-resistant material is equal to or more than 2mm.

12. A fitting method of a rectangular fire-prevention sheet according to Claim 10 or 11, for wrapping a long object to be fitted with the fire-prevention sheet, characterized by the step of winding the fire-prevention sheet around the object so that the edge of the long side of the rectangular fire-prevention sheet crosses at about a right angle to the long axis of the object, and the step of folding the edge of the short side of the rectangular fire-prevention sheet to the inside in order to prevent an exposure of the edge to the outside.

13. A fitting method according to Claim 12, characterized by folding the edges of both short sides of the rectangular fire-prevention sheet together after overlapping them so that the width of the overlap is equal to or more than 3cm.

14. A fire-prevention structure for a perforated part for wires or cables in a wall or a floor of a building and the like, characterized in that;
the wires or cables in the perforated part are surrounded by a first fire-prevention sheet and each opening of the part is covered with a second fire-prevention sheet, whereby the edge of the second fire-prevention sheet contacts the first fire-prevention sheet,
gaps in the contact are filled with a non-hardening type and heat-resistant sealing material, and
a sheet in which an incombustible rubber sheet and a metal sheet are layered is used as the first and the second fire-prevention sheet.

15. A fire-prevention structure for wires or cables characterized in that the wires or cables laid in a pit or a metal duct are surrounded with a fire-prevention sheet.
